# EUROPÄISCHE PATENTSCHRIFT

(11) **EP 1 481 195 B1**
(45) Veröffentlichungstag und Bekanntmachung des Hinweises auf die Patenterteilung: **23.06.2010**
(21) Anmeldenummer: 03743358.8
(22) Anmeldetag: 28.02.2003
(51) Int. Cl.: F23M 99/00, F23R 3/28, F23R 3/14

(54) **BRENNER, VERFAHREN ZUM BETRIEB EINES BRENNERS UND GASTURBINE**
BURNER, METHOD FOR OPERATING A BURNER AND GAS TURBINE
BRULEUR, PROCEDE DE FONCTIONNEMENT D'UN BRULEUR ET TURBINE A GAZ

(30) Priorität: 07.03.2002 EP 02005136
(43) Veröffentlichungstag der Anmeldung: 01.12.2004
(73) Patentinhaber: SIEMENS AKTIENGESELLSCHAFT, 80333 München (DE)
(72) Erfinder: FLOHR, Patrick, 45478 Mülheim (DE); KREBS, Werner, 45481 Mülheim (DE); SCHULZE, Günther, 90556 Seukendorf (DE)
(86) Internationale Anmeldenummer: PCT/EP2003/002079
(87) Internationale Veröffentlichungsnummer: WO 2003/074937

(56) Entgegenhaltungen:
- EP-A- 0 597 138
- EP-A- 1 004 823
- WO-A-93/10401
- WO-A-99/49264
- DE-A- 3 329 937

## Beschreibung

Die Erfindung betrifft einen Brenner mit einem Brennerkanal, in den Verbrennungsluft an einer Lufteinleitungsposition und Brennstoff an einer Brennstoffeinleitungsposition einleitbar sind, wobei die Brennstoffeinleitungsposition stromab der Lufteinleitungsposition liegt und wobei die Verbrennungsluft mit dem Brennstoff im Brennerkanal mischbar und anschließend in eine Verbrennungszone einleitbar sind. Insbesondere ist der Brenner als Gasturbinenbrenner ausgebildet. Die Erfindung betrifft auch ein Verfahren zum Betrieb eines solchen Brenners sowie eine Gasturbine, insbesondere mit einer Ringbrennkammer.

In Verbrennungssystemen wie Gasturbinen, Flugtriebwerken, Raketenmotoren und Heizungsanlagen kann es zu thermoakustisch induzierten Verbrennungsschwingungen kommen. Diese entstehen durch eine Wechselwirkung der Verbrennungsflamme und der damit verbundenen Wärmefreisetzung mit akustischen Druckschwankungen. Durch eine akustische Anregung kann die Lage der Flamme, die Flammenfrontfläche oder die Gemischzusammensetzung schwanken, was wiederum zu Schwankungen der Wärmefreisetzung führt. Bei konstruktiver Phasenlage kann es zu einer positiven Rückkopplung und Verstärkung kommen. Eine so verstärkte Verbrennungsschwingung kann zu erheblichen Lärmbelastungen und Schädigungen durch Vibrationen führen.

Wesentlich beeinflusst werden diese thermoakustisch hervorgerufenen Instabilitäten durch die akustischen Eigenschaften des Brennraumes und die am Brennraumeintritt und Brennraumaustritt sowie an den Brennkammerwänden vorliegenden Randbedingungen. Die akustischen Eigenschaften können durch den Einbau von Helmholtzresonatoren verändert werden.

Die WO 93/10401 A1 zeigt eine Einrichtung zur Unterdrückung von Verbrennungsschwingungen in einer Brennkammer einer Gasturbinenanlage. Ein Helmholtzresonator ist mit einer Brennstoffzuführleitung strömungstechnisch verbunden. Die akustischen Eigenschaften der Zuführleitung bzw. des akustischen Gesamtsystems werden hierdurch so verändert, dass Verbrennungsschwingungen unterdrückt werden. Es hat sich allerdings gezeigt, dass diese Maßnahme nicht in allen Betriebszuständen ausreicht, da es auch bei einer Unterdrückung von Schwingungen in der Brennstoffleitung zu Verbrennungsschwingungen kommen kann.

Die US-A-6 058 709 schlägt zur Vermeidung von Verbrennungsschwingungen vor, Brennstoff an axial unterschiedlichen Positionen im Brennkanal eines Brenners einzuleiten. Hierdurch werden hinsichtlich der Ausbildung von Verbrennungsschwingungen konstruktive Phasenlagen in der Gemischzusammensetzung durch destruktive überlagert, so dass es insgesamt zu niedrigeren Schwankungen und damit zu einer verringerten Neigung zur Ausbildung von Verbrennungsschwingungen kommt. Diese Maßnahme ist allerdings apparativ im Vergleich zur rein passiven Maßnahme der Verwendung von Helmholtzresonatoren vergleichsweise aufwendig.

In der EP 0 597 138 A1 ist eine Gasturbinen-Brennkammer beschrieben, die im Bereich der Brenner luftgespülte Helmholtzresonatoren aufweist. Durch diese Resonatoren wird Schwingungsenergie von in der Brennkammer auftretenden Verbrennungsschwingungen absorbiert und die Verbrennungsschwingungen werden hierdurch gedämpft.

Eine weitere Maßnahme zur Dämpfung von Verbrennungsschwingungen ist in der EP 1 004 823 A2 gezeigt. Hier ist ein Helmholtzresonator unmittelbar mit dem Mischbereich des Brenners verbunden. Es wird betont und auch ausschließlich offenbart, dass der Resonator stromauf der Brennstoffzuführung anzubringen ist, da durch den Resonator im Brenner entstehende und auch durch die Zuführleitungen hervorgerufene Verbrennungsschwingungen absorbiert werden sollen.

Aufgabe der Erfindung ist die Angabe eines Gasturbinbrenners mit einer besonders geringen Neigung zur Ausbildung von Verbrennungsschwingungen. Weitere Aufgabe der Erfindung ist die Angabe eines Verfahrens zum Betrieb eines Gasturbinbrenners, durch das effizient Verbrennungsschwingungen vermieden werden. Schließlich ist auch Aufgabe der Erfindung die Angabe einer Gasturbine mit besonders geringer Neigung zur Ausbildung von Verbrennungsschwingungen.

Erfindungsgemäß wird die auf einen Gasturbinbrenner gerichtete Aufgabe gelöst durch Angabe eines Gasturbinbrenners mit einem Brennerkanal, in den Verbrennungsluft an einer Lufteinleitungsposition und Brennstoff an einer Brennstoffeinleitungsposition einleitbar sind, wobei die Brennstoffeinleitungsposition stromab der Lufteinleitungsposition liegt und wobei die Verbrennungsluft mit dem Brennstoff im Brennerkanal mischbar und anschließend in eine Verbrennungszone einleitbar sind, wobei ein Helmholtzresonator an einer Resonatorposition mit dem Brennerkanal stromab der Brennstoffeinleitungsposition und stromauf der Verbrennungszone unmittelbar strömungstechnisch so verbunden ist, dass eine Kopplung zwischen Luftzahlschwankungen und Verbrennungsschwingungen weitgehend aufgebrochen wird.

Die Luftzahl ist eine in der Verbrennungstechnik wohlbekannte Größe und kennzeichnet proportional die Gemischzusammensetzung des Gemisches aus Verbrennungsluft und Brennstoff durch das Verhältnis der Konzentrationen.

Erstmalig wird mit der Erfindung der Weg eingeschlagen, eine Verbrennungsschwingung durch einen Helmholtzresonator nicht nur zu dämpfen sondern auch einen wesentlichen Grund für die Entstehung der Verbrennungsschwingung zu unterbinden: Die Schwankungen der Luftzahl. Die Luftzahlschwankung führt durch die zeitlich inhomogene Wärmefreisetzung zu akustischen Impulsen, die nach oben beschriebener Art zu einer Rückkopplung und den Aufbau einer Verbrennungsschwingung führen können. In dem nun der Helmholtzresonator stromab der Brennstoffeinleitung angeordnet wird, werden akustische Störungen an der Brennstoffeinleitungsposition und damit Luftzahlschwankungen verringert. Über die reine Absorption von Schwingungsenergie hinaus vermag der Helmholtzresonator an dieser Resonatorposition also schon das Entstehen der Verbrennungsschwingung zu vermeiden. Hierdurch wird ein sehr viel effizienteres Mittel gegen Verbrennungsschwingungen erreicht.

Vorzugsweise umgibt der Brennerkanal als Ringkanal einen Zentralkanal, durch den getrennt vom Ringkanal Brennstoff und Verbrennungsluft der Verbrennungszone zuführbar sind, wobei der Helmholtzresonator den Ringkanal ebenfalls ringförmig umgibt.

Hierdurch kann der Resonator vollständig und symmetrisch auf dem Ringkanal einwirken. Ungleichmäßige Temperaturverteilungen werden hierdurch vermieden. Durch die Position stromab der Brennstoffzufuhr kann zudem der Resonator unmittelbar auf den Ort der höchsten Wärmefreisetzung einwirken, was zu einer besonders hohen Wirkung des Resonators führt.

Der Brenner kann insbesondere ein kombinierter Diffusions- und Vormischbrenner sein. Dabei wird in dem Ringkanal als Vormischkanal Brennstoff innig mit Verbrennungsluft vermischt. Der Zentralkanal ist als ein Diffusionsbrenner ausgeführt, in dem Luft und Brennstoff im wesentlichen erst in der Verbrennungszone gemischt werden. Ein Vormischbrenner kann durch eine sogenannte magere Verbrennung wenig Brennstoff in viel Luft verbrennen und weist hierdurch geringe Stickoxidemissionen auf. Allerdings ist die magere Verbrennung häufig instabil und neigt verstärkt zur Ausbildung von Verbrennungsschwingungen. Der ringförmige Helmholtzresonator wirkt dem entgegen. Der Diffusionsbrenner verbrennt ein fetteres Gemisch und stabilisiert, falls nötig, die Vormischverbrennung, allerdings für den Preis erhöhter Stickoxidemissionen.

Der Brennerkanal kann auch als Zentralkanal ausgeführt und von einem Ringkanal umgeben sein, durch den getrennt vom Zentralkanal Brennstoff und Verbrennungsluft der Verbrennungszone zuführbar sind, wobei der Helmholtzresonator den Zentralkanal ringförmig umgibt.

In besonders bevorzugter Ausgestaltung können sowohl beim Ringkanal als auch beim Zentralkanal Helmholtzresonatoren jeweils stromab der Brennstoffzuführung angeordnet sein.

Bevorzugt sind im Brennerkanal Drallschaufeln stromauf der Resonatorposition angeordnet. Durch solche Drallschaufeln wird ein die Verbrennung stabilisierender Drall erzeugt. Weiter bevorzugt ist der Brennstoff über die Drallschaufeln einleitbar.

Vorzugsweise sind durch den Helmholtzresonator Verbrennungsschwingungen absorbierbar oder reflektierbar. Während herkömmliche Resonatoren ausschließlich durch Absorption wirken, kann nach dem Konzept der Erfindung auch eine reflektierende Wirkung des Helmholtzresonators Verbrennungsschwingungen verringern, da wie oben ausgeführt eine Reflexion zu einer Verringerung von akustischen Störungen am Brennstoffeinlass und damit zur Verringerung von Luftzahlschwankungen führt.

Bevorzugt weist der Helmholtzresonator ein einstellbares Volumen auf. Hierdurch können die akustischen Eigenschaften eingestellt und somit das Gesamtsystem akustisch abgestimmt werden. Denkbar ist auch eine Einstellung des Druckes, etwa von Luft, im Resonatorvolumen, was ebenfalls die akustischen Eigenschaften verändert und was sogar im Betrieb eingestellt werden könnte.

Vorzugsweise weist der Helmholzresonator ein Resonatorvolumen auf und ist über eine Resonatormündung mit dem Brennerkanal verbunden, wobei die Resonatormündung durch ein Röhrchen in das Resonatorvolumen hinein verlängert ist. Weiter bevorzugt ragen mehrere Röhrchen in das Resonatorvolumen. Das innere Volumen des Resonators wird dabei kaum geändert. Die äußeren Abmessungen des Resonators können somit klein gehalten werden. Die Röhrchen können dabei verwunden ausgeführt werden, um genügend Abstand zu den Wänden zu haben. Durch Veränderung der Länge der Röhrchen kann die Dämpfungsvorrichtung verschiedene Frequenzen, die im Verbrennungssystem auftreten, eingestellt werden. Dabei müssen die äußeren Abmessungen des Resonators und damit des Brenneinsatzes sowie die offene Gesamtquerschnittsfläche nicht geändert werden. Der Hauptvorteil: um tiefe Frequenzen zu dämpfen, kann mit Hilfe der hineinragenden Röhrchen auf eine Volumenvergrößerung des Resonators verzichtet werden.

Erfindungsgemäß wird die auf eine Gasturbine gerichtete Aufgabe gelöst durch Angabe einer Gasturbine mit einem Gasturbinbrenner nach einer der oben beschriebenen Ausführungen.

Die Vorteile einer solchen Gasturbine entsprechen den Vorteilen, wie sie zum erfindungsgemäßen Gasturbinbrenner beschrieben wurden. In einer Gasturbine sind Verbrennungsschwingungen wegen der hohen Leistungsdichten besonders störend und schädlich. Weiter bevorzugt weist die Gasturbine eine Ringbrennkammer auf. In einer Ringbrennkammer kann es durch den großen, gekoppelten Brennraum leicht zu schweren Verbrennungsschwingungen kommen.

Erfindungsgemäß wird die auf ein Verfahren gerichtete Aufgabe gelöst durch Angabe eines Verfahrens zum Betrieb eines Gasturbinbrenners mit einem Brennerkanal, bei welchem Verfahren Verbrennungsluft an einer Lufteinleitungsposition und Brennstoff an einer Brennstoffeinleitungsposition stromab der Lufteinleitungsposition eingeleitet wird, und wobei die Verbrennungsluft mit dem Brennstoff im Brennerkanal gemischt und anschließend in eine Verbrennungszone eingeleitet wird und wobei eine Kopplung zwischen Luftzahlschwankungen und Verbrennungsschwingungen weitgehend dadurch aufgebrochen wird, dass ein Helmholtzresonator an einer Resonatorposition mit dem Brennerkanal stromab der Brennstoffeinleitungsposition und stromauf der Verbrennungszone unmittelbar strömungstechnisch so verbunden ist, dass Verbrennungsschwingungen nicht bis zur Brennstoffeinleitungsposition vordringen.

Die Vorteile eines solchen Verfahrens entsprechen den obigen Ausführungen zu den Vorteilen des Brenners.

Die Erfindung wird beispielhaft und teilweise schematisch anhand der Zeichnung erläutert. Es zeigen:
- FIG 1:: Ein Verfahren zur Verringerung von Verbrennungs- schwingungen
- FIG 2:: Einen Gasturbinenbrenner
- FIG 3:: Eine Gasturbine
- FIG 4:: Einen Helmholtzresonator

Gleiche Bezugszeichen haben in den verschiedenen Figuren die gleiche Bedeutung.

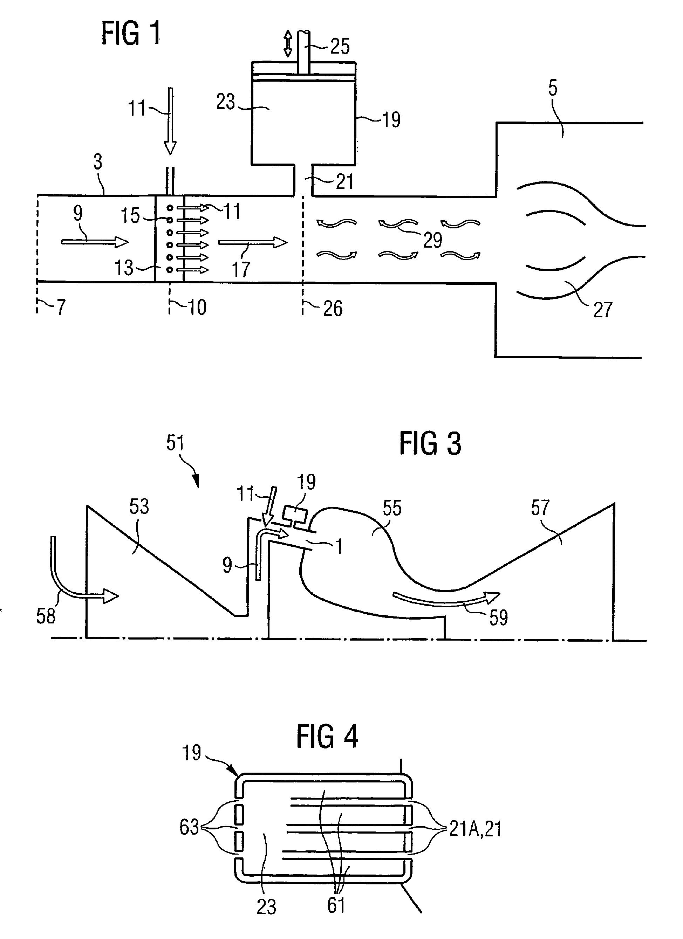

Figur 1 zeigt schematisch einen Brenner 1 und ein Verfahren zum Betrieb des Brenners 1. Der Brenner 1 weist einen Brennerkanal 3 auf. Der Brennerkanal 3 mündet in eine Brennkammer 5. An einer Lufteinleitungsposition 7 wird Verbrennungsluft 9 in den Brennerkanal 3 eingeleitet. An einer stromab der Lufteinleitungsposition 7 liegenden Brennstoffeinleitungsposition 10 wird Brennstoff 11, insbesondere Erdgas, in den Brennerkanal 3 eingeleitet. Dies geschieht über Auslassöffnungen 15 in Drallschaufeln 13, die im Brennerkanal 3 angeordnet sind und durch Erzeugung eines Rückströmgebietes zu einer Stabilisierung der Verbrennung führen. Das entstehende Gemisch 17 aus Verbrennungsluft 9 und Brennstoff 11 wird dann in der Brennkammer 5 verbrannt.

Ein Helmholtzresonator 19 ist über eine Resonatormündung 21 mit dem Brennerkanal 3 unmittelbar strömungstechnisch an einer Resonatorposition 26 verbunden. Der Helmholtzresonator 19 weist ein Resonatorvolumen 23 auf. Das Resonatorvolumen 23 ist über einen Kolben 25 einstellbar.

Bei der Verbrennung in einer Verbrennungszone 27 in der Brennkammer 5 kann es durch ungleichmäßige Hitzefreisetzung zu akustischen Pulsen kommen, die ihrerseits nach Reflexion an den umgebenden Wänden eine ungleichmäßige Hitzefreisetzung verursachen können. Dies kann bei phasenrichtiger Überlagerung zum Aufbau einer Verbrennungsschwingung 29 führen, die auch in den Brennerkanal 3 eindringt. Eine wesentliche Ursache für das Entstehen der ungleichmäßigen Hitzefreisetzung liegt in Luftzahlschwankungen, die durch akustische Störungen im Bereich der Brennstoffeinlassposition 10 verursacht werden können. An der Resonatorposition 26 werden durch den Helmholtzresonator 19 die akustischen Eigenschaften des Brennerkanals 3 so verändert, dass eine Verbrennungsschwingung 29 nicht bis zur Brennstoffeinlassposition 10 vordringt. Hierdurch wird eine Entkopplung von Luftzahlschwankungen an der Brennstoffeinlassposition 10 und Verbrennungsschwingungen 29 erreicht. Erstmals wird somit durch einen Helmholtzresonator 19 eine Ursache für das Entstehen einer Verbrennungsschwingung 29 bekämpft und nicht nur lediglich durch Absorption die Amplitude solcher Verbrennungsschwingungen 29 gedämpft.

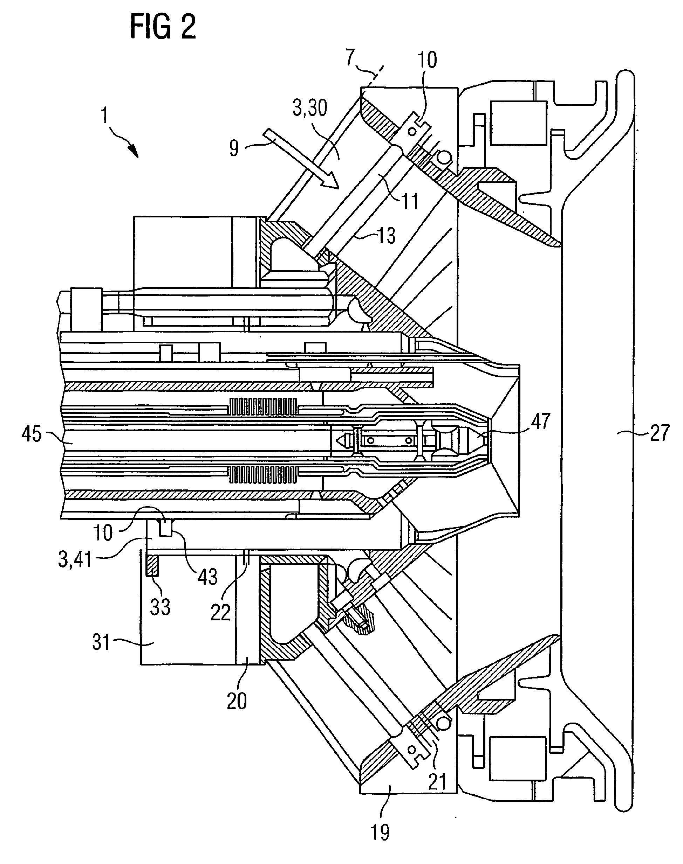

In Figur 2 ist ein Gasturbinenbrenner 1 dargestellt. Der Brennerkanal 3 umgibt als ein Ringkanal 30 einen Zentralkanal 41. Der Ringkanal 30 ist als ein Vormischkanal ausgeführt, in dem Brennstoff 11 und Verbrennungsluft 9 vor der Verbrennung intensiv vermischt werden. Dies wird als Vormischverbrennung bezeichnet. Der Brennstoff 11 wird über hohl ausgeführte Drallschaufeln 13 in den Ringkanal 30 eingeleitet. Der Zentralkanal 41 mündet in die Verbrennungszone 27 zusammen mit einer zentralen Brennstofflanze 45, die Brennstoff 47, insbesondere Öl, über eine Dralldüse 47 zuführt. In diesem Fall werden Brennstoff 11 und Verbrennungsluft 9 erst in der Verbrennungszone 27 gemischt und man spricht von einer Diffusionsverbrennung. In den Zentralkanal 41 kann aber auch stromauf der Verbrennungszone 27 Brennstoff 11, insbesondere Erdgas, über einen Brennstoffeinlass 43 zugegeben werden. Der Ringkanal 30 ist ringförmig von einem Helmholtzresonator 19 umgeben, der über lochförmig ausgebildete Resonatormündungen 21 mit dem Ringkanal 30 unmittelbar strömungstechnisch verbunden ist. Auch der Zentralkanal 41 ist von einem Helmholtzresonator 20 über lochförmig ausgebildete Resonatormündungen 22 mit dem Zentralkanal 41 unmittelbar strömungstechnisch verbunden. In beiden Fällen ist der jeweilige Helmholtzresonator 19,20 stromab der jeweiligen Brennstoffeinlassposition 10 angeordnet, mit der oben beschriebenen Wirkung. Ein Zusatzresonator 31 ist zur weiteren Dämpfung von Verbrennungsschwingungen 29 über eine schlitzartige Resonatormündung 33 mit dem Zentralkanal 41 unmittelbar strömungstechnisch verbunden.

In Figur 3 ist eine Gasturbine 51 abgebildet. Die Gasturbine 51 weist einen Verdichter 53, eine Ringbrennkammer 55 und ein Turbinenteil 57 auf. Luft 58 aus der Umgebung wird dem Verdichter 53 zugeleitet und dort hoch zu Verbrennungsluft 9 verdichtet. Anschließend wird die Verbrennungsluft 9 der Ringbrennkammer 55 zugeleitet. Über Gasturbinenbrenner 1 der oben beschriebenen Art wird sie dort mit Brennstoff 11 zu einem Heißgas 59 verbrannt. Das Heißgas 59 treibt das Turbinenteil 57 an.

Die Figur 4 zeigt einen Helmholtzresontor 19 mit einem Resonatorvolumen 23 und einer Resonatormündung 21, die aus mehreren Bohrungen 21A besteht. Jede der Bohrungen 21A ist über ein jeweiliges Röhrchen 61 in das Resonatorvolumen 23 fortgesetzt. Die Röhrchen 61 ragen also in das Resonatorvolumen 23 hinein. Das innere Volumen des Resonators wird dabei kaum geändert. Die äußeren Abmessungen des Resonators 19 können somit klein gehalten werden. Die Röhrchen 61 können dabei verwunden ausgeführt werden, um genügend Abstand zu den Wänden zu haben. Durch Veränderung der Länge der Röhrchen 61 kann die Dämpfungsvorrichtung auf jede beliebige Frequenz, die im Verbrennungssystem auftritt, eingestellt werden. Dabei müssen die äußeren Abmessungen des Resonators 19 und damit des Brenneinsatzes sowie die offene Gesamtquerschnittsfläche nicht geändert werden. Der Hauptvorteil: um tiefe Frequenzen zu dämpfen, kann mit Hilfe der hineinragenden Röhrchen 61 auf eine Volumenvergrößerung des Resonators 19 verzichtet werden. Über Lufteinlassöffnungen 63 wird der Resonator 19 luftgespült. Damit ist einerseits eine Kühlung des Resonators 19 möglich, andererseits kann über die Durchflussmenge an Luft die Impedanz des Resonators 19 eingestellt werden.

## Patentansprüche

1. Gasturbinenbrenner (1) mit einem Brennerkanal (3), in den Verbrennungsluft (9) an einer Lufteinleitungsposition (7) und Brennstoff (11) an einer Brennstoffeinleitungsposition (10) einleitbar sind, wobei die Brennstoffeinleitungsposition (10) stromab der Lufteinleitungsposition (7) liegt und wobei die Verbrennungsluft (9) mit dem Brennstoff (11) im Brennerkanal (3) mischbar und anschließend in eine Verbrennungszone (27) einleitbar sind,
**dadurch gekennzeichnet, dass** ein Helmholtzresonator (19) an einer Resonatorposition (26) mit dem Brennerkanal (3) stromab der Brennstoffeinleitungsposition (10) und stromauf der Verbrennungszone (27) unmittelbar strömungstechnisch so verbunden ist, dass eine Kopplung zwischen Luftzahlschwankungen und Verbrennungsschwingungen. (29) weitgehend aufgebrochen wird.

2. Gasturbinenbrenner (1) gemäß Anspruch 1, bei dem der Brennerkanal (3) als Ringkanal (30) ausgeführt ist und einen Zentralkanal (41) umgibt, durch den getrennt vom Ringkanal (30) Brennstoff (11) und Verbrennungsluft (9) der Verbrennungszone (27) zuführbar sind, wobei der Helmholtzresonator (19) den Ringkanal (30) ebenfalls ringförmig umgibt.

3. Gasturbinenbrenner (1) gemäß Anspruch 1, bei dem der Brennerkanal (3) als Zentralkanal (41) ausgeführt ist und von einem Ringkanal (30) umgeben ist, durch den getrennt vom Zentralkanal (41) Brennstoff (11) und Verbrennungsluft (9) der Verbrennungszone (27) zuführbar sind, wobei der Helmholtzresonator (19) den Zentralkanal (41) ringförmig umgibt.

4. Gasturbinenbrenner (1) gemäß Anspruch 3, bei dem der Ringkanal (30) mit einem weiteren, den Ringkanal (30) ringförmig umgebenden Helmholtzresonator (19) stromab einer in den Ringkanal (30) mündenden Brennstoffeinleitungsposition (10) unmittelbar strömungstechnisch verbunden ist.

5. Gasturbinenbrenner (1) gemäß einem der vorhergehenden Ansprüche, bei dem im Brennerkanal (3) Drallschaufeln (13) stromauf der Resonatorposition (26) angeordnet sind.

6. Gasturbinenbrenner (1) nach Anspruch 5, bei dem der Brennstoff (11) über die Drallschaufeln (13) einleitbar ist.

7. Gasturbinenbrenner (1) nach einem der vorhergehenden Ansprüche, bei dem durch den Helmholtzresonator (19) Verbrennungsschwingungen (29) absorbierbar sind.

8. Gasturbinenbrenner (1) nach einem der vorhergehenden Ansprüche, bei dem durch den Helmholtzresonator (19) Verbrennungsschwingungen (29) reflektierbar sind.

9. Gasturbinenbrenner (1) nach einem der vorhergehenden Ansprüche, bei dem der Helmholtzresonator (19) ein einstellbares Resonatorvolumen (23) aufweist.

10. Gasturbinenbrenner (1) nach einem der vorhergehenden Ansprüche, bei dem der Helmholtzresonator (19) ein Resonatorvolumen (23) aufweist und über eine Resonatormündung (21) mit dem Brennerkanal (3) verbunden ist, wobei die Resonatormündung (21) durch ein Röhrchen (61) in das Resonatorvolumen (23) hinein verlängert ist.

11. Gasturbine (51) mit einem Gasturbinenbrenner (1) nach einem der vorhergehenden Ansprüche.

12. Gasturbine (51) nach Anspruch 11 mit einer Ringbrennkammer (55).

13. Verfahren zum Betrieb eines Gasturbinenbrenners (1) mit einem Brennerkanal (3), bei welchem Verfahren Verbrennungsluft (9) an einer Lufteinleitungsposition (7) und Brennstoff (11) an einer Brennstoffeinleitungsposition (10) stromab der Lufteinleitungsposition (7) eingeleitet wird und wobei die Verbrennungsluft (9) mit dem Brennstoff (11) im Brennerkanal (3) gemischt und anschließend in eine Verbrennungszone (27) eingeleitet wird,
**dadurch gekennzeichnet, dass** eine Kopplung zwischen Luftzahlschwankungen und Verbrennungsschwingungen (29) weitgehend **dadurch** aufgebrochen wird, dass ein Helmholtzresonator (19) an einer Resonatorposition (26) mit dem Brennerkanal (3) stromab der Brennstoffeinleitungsposition (10) und stromauf der Verbrennungszone (27) unmittelbar strömungstechnisch so verbunden ist, dass Verbrennungsschwingungen (29) nicht bis zur Brennstoffeinleitungsposition (10) vordringen.

## Claims

1. Gas turbine combustor (1) having a combustor channel (3) into which combustion air (9) can be introduced at an air inlet position (7) and fuel (11) can be introduced at a fuel inlet position (10), wherein the fuel inlet position (10) is located downstream of the air inlet position (7) and wherein the combustion air (9) and the fuel (11) can be mixed in the combustor channel (3) and then discharged into a combustion zone (27),
**characterised in that**
a Helmholtz resonator (19) is directly connected to the flow of the combustor channel (3) at a resonator position (26) which is downstream of the fuel inlet position (10) and upstream of the combustion zone (27), such that a link between air ratio fluctuations and combustion oscillations (29) is largely broken down.

2. Gas turbine combustor (1) according to claim 1, in which the combustor channel (3) is designed as an annular channel (30) and surrounds a central channel (41) via which, separately from the annular channel (30), fuel (11) and combustion air (9) can be supplied to the combustion zone (27), wherein the Helmholtz resonator (19) likewise surrounds the annular channel (30) annularly.

3. Gas turbine combustor (1) according to claim 1, in which the combustor channel (3) is designed as a central channel (41) and is surrounded by an annular channel (30) via which, separately from the central channel (41), fuel (11) and combustion air (9) can be supplied to the combustion zone (27), wherein the Helmholtz resonator (19) surrounds the central channel (41) annularly.

4. Gas turbine combustor (1) according to claim 3, in which the annular channel (30) is directly connected, in terms of flow, to a further Helmholtz resonator (19) which surrounds the annular channel (30) annularly, said connection being downstream of a fuel inlet position (10) which opens into the annular channel (30).

5. Gas turbine combustor (1) according to one of the preceding claims, in which twisted blades (13) are arranged upstream of the resonator position (26) in the combustor channel (3).

6. Gas turbine combustor (1) according to claim 5, in which the fuel (11) can be introduced via the twisted blades (13).

7. Gas turbine combustor (1) according to one of the preceding claims, in which combustion oscillations (29) can be absorbed by the Helmholtz resonator (19).

8. Gas turbine combustor (1) according to one of the preceding claims, in which combustion oscillations (29) can be reflected by the Helmholtz resonator (19).

9. Gas turbine combustor (1) according to one of the preceding claims, in which the Helmholtz resonator (19) has an adjustable resonator volume (23).

10. Gas turbine combustor (1) according to one of the preceding claims, in which the Helmholtz resonator (19) has a resonator volume (23) and is connected to the combustor channel (3) via a resonator port (21), wherein the resonator port (21) extends into the resonator volume (23) by means of a small tube (61).

11. Gas turbine (51) having a gas turbine combustor (1) according to one of the preceding claims.

12. Gas turbine (51) according to claim 11, having an annular combustion chamber (55).

13. Method for operating a gas turbine combustor (1) having a combustor channel (3), in which method combustion air (9) is introduced at an air inlet position (7) and fuel (11) is introduced at a fuel inlet position (10) which is downstream of the air inlet position (7), and wherein the combustion air (9) is mixed with the fuel (11) in the combustor channel (3) and then discharged into a combustion zone (27),
**characterised in that** a link between air ratio fluctuations and combustion oscillations (29) is largely broken down by virtue of a Helmholtz resonator (19) being directly connected to the flow of the combustor channel (3) at a resonator position (26) which is downstream of the fuel inlet position (10) and upstream of the combustion zone (27), such that combustion oscillations (29) do not penetrate as far as the fuel inlet position (10).

## Revendications

1. Brûleur ( 1 ) de turbine à gaz, comprenant un canal ( 3 ) de brûleur dans lequel de l'air ( 9 ) de combustion peut être introduit en une position ( 7 ) d'introduction d'air et du combustible ( 11 ) en une position ( 10 ) d'introduction de combustible, la position ( 10 ) d'introduction de combustible étant en aval de la position ( 7 ) d'introduction d'air et l'air ( 9 ) de combustion pouvant être mélangé au combustible ( 11 ) dans le canal ( 3 ) du brûleur et être envoyé ensuite dans une zone ( 27 ) de combustion,
**caractérisé en ce qu'**un résonateur ( 19 ) d'Helmholtz communique directement en technique d'écoulement en une position ( 16 ) de résonateur avec le canal ( 3 ) du brûleur en aval de la position ( 10 ) d'introduction du combustible et en amont de la zone ( 27 ) de combustion de manière à interrompre dans une grande mesure un couplage entre des fluctuations d'indice d'air et des oscillations ( 29 ) de combustion.

2. Brûleur ( 1 ) de turbine à gaz suivant la revendication 1, dans lequel le canal ( 3 ) de brûleur est réalisé sous la forme d'un canal ( 30 ) annulaire et entoure un canal ( 41 ) central par lequel, séparément du canal ( 30 ) annulaire, du combustible ( 11 ) et de l'air ( 19 ) de combustion peuvent être envoyés à la zone ( 27 ) de combustion, le résonateur ( 19 ) d'Helmholtz entourant également d'une manière annulaire le canal ( 30 ) annulaire.

3. Brûleur ( 1 ) de turbine à gaz suivant la revendication 1, dans lequel le canal ( 3 ) de brûleur est réalisé sous la forme d'un canal ( 41 ) central et est entouré d'un canal ( 30 ) annulaire par lequel, séparément du canal ( 41 ) central, du combustible ( 11 ) et de l'air ( 19 ) de combustion peuvent être envoyés à la zone ( 27 ) de combustion, le résonateur ( 19 ) d'Helmholtz entourant annulairement le canal ( 41 ) central.

4. Brûleur ( 1 ) de turbine à gaz suivant la revendication 3, dans lequel le canal ( 30 ) annulaire communique directement en technique d'écoulement avec un autre résonateur ( 19 ) d'Helmholtz entourant annulairement le canal ( 30 ) annulaire en aval d'une position ( 10 ) d'introduction de combustible débouchant dans le canal ( 30 ) annulaire.

5. Brûleur ( 1 ) de turbine à gaz suivant l'une des revendications précédentes, dans lequel des aubes ( 13 ) de tourbillonnement sont disposées dans le canal ( 3 ) du brûleur en amont de la position ( 26 ) du résonateur.

6. Brûleur ( 1 ) de turbine à gaz suivant la revendication 5, dans lequel le combustible ( 11 ) peut être introduit par les aubes ( 13 ) de tourbillonnement.

7. Brûleur ( 1 ) de turbine à gaz suivant l'une des revendications précédentes, dans lesquelles les oscillations ( 29 ) de combustion peuvent être absorbées par le résonateur ( 19 ) d'Helmholtz.

8. Brûleur ( 1 ) de turbine à gaz suivant l'une des revendications précédentes, dans lesquelles les oscillations ( 29 ) de combustion peuvent être réfléchies par le résonateur ( 19 ) d'Helmholtz.

9. Brûleur ( 1 ) de turbine à gaz suivant l'une des revendications précédentes, dans lequel le résonateur ( 19 ) d'Helmholtz a un volume ( 23 ) de résonateur qui est réglable.

10. Brûleur ( 1 ) de turbine à gaz suivant l'une des revendications précédentes, dans lequel le résonateur ( 19 ) d'Helmholtz a un volume ( 23 ) de résonateur et communique par une embouchure ( 21 ) de résonateur avec le canal ( 3 ) de brûleur, l'embouchure ( 21 ) du résonateur étant prolongée par un petit tube ( 61 ) dans le volume ( 23 ) du résonateur.

11. Turbine ( 51 ) à gaz ayant un brûleur ( 1 ) de turbine à gaz suivant l'une des revendications précédentes.

12. Turbine ( 51 ) à gaz suivant la revendication 11, ayant une chambre de combustion ( 55 ) annulaire ( 13 ).

13. Procédé pour faire fonctionner un brûleur ( 1 ) de turbine à gaz, comprenant un canal ( 3 ) de brûleur, procédé dans lequel on introduit de l'air ( 9 ) de combustion en une position ( 7 ) d'introduction d'air et du combustible ( 11 ) en une position d'introduction de combustible en aval de la position ( 7 ) d'introduction d'air et dans lequel on mélange l'air ( 9 ) de combustion au combustible ( 11 ) dans le canal ( 3 ) du brûleur et on l'envoie ensuite dans une zone ( 27 ) de combustion,
**caractérisé en ce qu'**on interrompt dans une grande mesure un couplage entre des fluctuations d'indice d'air et des oscillations ( 29 ) de combustion par le fait qu'un résonateur ( 19 ) d'Helmholtz communique directement en technique d'écoulement en une position ( 26 ) de résonateur avec la canal ( 3 ) du brûleur en aval de la position ( 10 ) d'introduction du combustible et en amont de la zone ( 27 ) de combustion de manière à ce que des oscillations ( 29 ) de combustion ne puissent plus aller jusqu'à la position ( 10 ) d'introduction du combustible.
